(19) **Europäisches Patentamt / European Patent Office / Office européen des brevets**

(11) **EP 3 756 295 B1**

(12) **FASCICULE DE BREVET EUROPEEN**

(45) Date de publication et mention de la délivrance du brevet:
**25.09.2024 Bulletin 2024/39**

(21) Numéro de dépôt: **19710044.9**

(22) Date de dépôt: **11.02.2019**

(51) Classification Internationale des Brevets (IPC):
**H04L 1/00** *(2006.01)*

(52) Classification Coopérative des Brevets (CPC):
**H04L 1/0003; H04L 1/0009; H04L 1/0015; H04L 1/0076;** H04L 1/1819; H04L 2001/0097

(86) Numéro de dépôt international:
**PCT/FR2019/050294**

(87) Numéro de publication internationale:
**WO 2019/162592 (29.08.2019 Gazette 2019/35)**

(54) **PROCÉDÉ ET SYSTÈME OMAMRC DE TRANSMISSION AVEC ADAPTATION LENTE DE LIEN SOUS CONTRAINTE D'UN BLER**

OMAMRC-ÜBERTRAGUNGSVERFAHREN UND -SYSTEM MIT LANGSAMER VERBINDUNGSANPASSUNG UNTER BLER-EINSCHRÄNKUNG

OMAMRC TRANSMISSION METHOD AND SYSTEM WITH SLOW LINK ADAPTATION UNDER BLER CONSTRAINT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.02.2018 FR 1851593**

(43) Date de publication de la demande:
**30.12.2020 Bulletin 2020/53**

(73) Titulaire: **Orange**
**92130 Issy-les-Moulineaux (FR)**

(72) Inventeurs:
• **CEROVIC, Stefan**
**92326 Châtillon Cedex (FR)**

• **VISOZ, Raphaël**
**92326 Châtillon Cedex (FR)**

(56) Documents cités:
**WO-A1-2017/091177      WO-A1-2017/098188**

• **MOHAMAD ABDULAZIZ ET AL: "Cooperative Incremental Redundancy Hybrid Automatic Repeat Request Strategies for Multi-Source Multi-Relay Wireless Networks", IEEE COMMUNICATIONS LETTERS, IEEE SERVICE CENTER, PISCATAWAY, NJ, US, vol. 20, no. 9, 1 September 2016 (2016-09-01), pages 1808 - 1811, XP011622357, ISSN: 1089-7798, [retrieved on 20160908], DOI: 10.1109/LCOMM.2016.2590538**

## Description

La présente invention se rapporte au domaine des communications numériques. Au sein de ce domaine, l'invention se rapporte plus particulièrement à la transmission de données codées entre au moins deux sources et une destination avec relayage par au moins deux noeuds pouvant être des relais ou des sources.

Il est entendu qu'un relais n'a pas de message à transmettre. Un relais est un noeud dédié au relayage des messages des sources tandis qu'une source à son propre message à transmettre et peut en outre dans certain cas relayer les messages des autres sources.

Il existe de nombreuses techniques de relayage connues sous leur appellation anglo-saxonne : « amplify and forward », « décodé and forward », « compress-and-forward », « non-orthogonal amplify and forward », « dynamic decode and forward », etc.

L'invention s'applique notamment, mais non exclusivement, à la transmission de données via des réseaux mobiles, par exemple pour des applications temps réel, ou via par exemple des réseaux de capteurs.

Un tel réseau de capteurs est un réseau multi-utilisateurs, constitué de plusieurs sources, plusieurs relais et un destinataire utilisant un schéma d'accès multiple orthogonal du canal de transmission entre les relais et la destination, noté OMAMRC (« *Orthogonal Multiple-Access Multiple-Relay Channel* » selon la terminologie anglosaxonne).

## Art antérieur

WO 2017/098188 A1 divulgue un procédé de transmission de messages successifs formant une trame pour un système de télécommunication à M sources, éventuellement L relais et une destination, $M \geq 2$, $L \geq 0$ selon un schéma d'accès multiple orthogonal du canal de transmission entre les noeuds pris parmi les M sources et les L relais avec un nombre maximum de $M + T$ max intervalles de temps par trame transmise dont M intervalles alloués pendant une première phase à la transmission successive des M sources, et T max intervalles pour une ou plusieurs transmissions coopératives alloués pendant une deuxième phase à un ou plusieurs noeuds sélectionnés selon une stratégie de sélection.

Un réseau OMAMRC mettant en oeuvre une stratégie de coopération dite IR-HARQ (Incremental Redundancy Hybrid-ARQ) basée sur un relayage sélectif dit SDF (Sélective Decode and Forward) est connu de [1].

Dans ce type de coopération, les sources indépendantes entre elles diffusent, dans une première phase, leurs séquences d'informations codées sous forme de messages à l'attention d'un seul destinataire et en présence de relais. Les noeuds de relayage peuvent être soit des sources soit des relais. Les relais considérés de type *« Half Duplex »* HD, (c'est-à-dire qu'un relais ne peut recevoir et transmettre simultanément) reçoivent les messages des sources, les décodent et génèrent un message uniquement à partir des messages des sources décodés sans erreur. Les relais accèdent dans une seconde phase au canal de manière orthogonale en temps entre eux pour transmettre leur message vers la destination. La sélectivité des relais fait qu'un relais ne transmet un message que s'il décode au moins une source sans erreur. Une source peut se comporter durant la seconde phase comme un relais qui a décodé sans erreur au moins un des messages des sources, le message de la source considérée. Ainsi durant la seconde phase, tous les noeuds du système sont considérés comme des noeuds de relayage pouvant accéder au canal de manière orthogonale en temps. La destination peut choisir durant la seconde phase quel noeud doit transmettre à un instant donné. Il est aussi possible que les noeuds de relayage suivent une séquence d'activation connue à l'avance par la destination et par les noeuds de relayage durant la seconde phase.

Des canaux de contrôle à débit très limité sont autorisés depuis la destination vers les sources pour allouer les débits aux sources. Par ailleurs, les sources et les relais doivent remonter périodiquement à la destination des métriques représentatives du SNR moyen des liens qu'ils peuvent observer.

Par ailleurs, des canaux de contrôles à débit limités sont nécessaires pour mettre en oeuvre la stratégie de sélection des noeuds de transmission.

La retransmission d'un noeud (pouvant être un relais ou une source) contient un ou plusieurs messages combinés des sources. Elle est demandée par un signal de contrôle diffusé par la destination ou suit une séquence d'activation connue à l'avance et se traduit en l'émission d'une redondance par le noeud sélectionné basée sur un codage incrémental d'une ou plusieurs sources. Il peut exister en outre des canaux de contrôle pour que chaque noeud informe la destination des messages reçus et correctement décodés.

Un tel procédé est particulièrement adapté à un système déployé en milieu urbain dans lequel le canal de transmission a généralement un profil à évanouissements dit de Rayleigh. En effet, de tels évanouissements perturbent le signal transmis et se traduisent par une probabilité non nulle de détection erronée (probabilité dite de coupure ou d'« outage » selon la terminologie anglosaxonne).

Parmi les techniques de transmission avec relayage, il est connu un procédé d'adaptation lente de lien pour un système OMAMRC. Avant toute transmission, la destination met en oeuvre une adaptation lente de lien c'est-à-dire qu'elle alloue des débits aux sources connaissant la distribution statistique de tous les canaux (CDI: Channel Distribution Information). En général, il est possible de remonter à la CDI sur la base de la connaissance du SNR moyen de chaque lien du système.

Les débits déterminés lors de la mise en oeuvre prennent des valeurs discrètes. Chaque débit alloué $R_s$ au source s correspond à un schéma de codage et de modulation (MCS : Modulation and Coding Scheme) qui appartient à la famille des MCS définie par le système. Dans la suite, la somme $\Sigma_i R_{s_i}$ de ces débits est appelée débit somme et ne doit pas être confondue avec l'efficacité spectrale moyenne.

Les transmissions des messages des sources sont divisées en trames pendant lesquelles les CSI des liens sont supposés constants (hypothèse d'évanouissements lents). L'allocation de débit est supposée ne pas changer pendant plusieurs centaines de trames, elle change uniquement avec les changements de CDI.

La transmission d'une trame se déroule en deux phases qui sont éventuellement précédées d'une phase additionnelle.

Pendant la première phase, les sources transmettent chacune à leur tour leur message respectif pendant des intervalles de temps « time-slot » dédiés chacun à une source.

Une requête de répétition hybride et automatique (HARQ) à redondance incrémentale (IR) est utilisée pendant la seconde phase comme un mécanisme efficace a posteriori d'adaptation rapide de lien selon lequel les débits de codage des sources s'adaptent à la qualité connue du canal. Pendant chaque time slot de la seconde phase la destination planifie le noeud qui transmet. Le noeud qui transmet met en oeuvre un codage conjoint canal et réseau (JNCC: Joint Network Channel Coding) des messages qu'il a décodés avec succès.

Le procédé d'adaptation lente de lien est mis en oeuvre pendant la phase initiale qui intervient avant la première phase et ceci une fois toutes les plusieurs centaines de trames (i.e. à chaque fois que les statistiques de qualité du canal/lien changent).

L'adaptation lente de lien se propose de trouver le débit somme maximum sous contrainte d'atteindre un BLER commun moyen cible basé sur la probabilité de coupure $\varepsilon_{com}$ à l'issue d'un nombre fixé $X \geq 1$ de retransmissions coopératives. Le procédé repose ainsi sur l'idée qu'avec un choix approprié du BLER commun moyen cible, qui est corrélé avec les BLERs individuels moyens, il est possible d'atteindre une bonne efficacité spectrale.

Un algorithme basé sur une approche sans interférence ou « Genie Aided » est utilisé pour résoudre le problème d'optimisation d'allocation multidimensionnelle de débit (rate). Cette approche consiste à déterminer indépendamment chaque débit d'une source en supposant que tous les messages des autres sources sont connus de la destination et des relais.

Bien que la stratégie de coopération est telle que les sources et les relais coopèrent pour maximiser la somme des débits transmis entre les sources et la destination dans une situation proche de la réalité, c'est-à-dire où il n'y a pas de symétrie imposée entre les liens comme c'est le cas pour d'autres techniques antérieures telles que [1], une difficulté vient de l'absence de relation claire entre la probabilité de coupure commune (« common outage » représentative du BLER commun moyen) et les probabilités individuelles de coupure (« individual outage » représentative du BLER individuel moyen). Cette difficulté rend impossible la démonstration que ce procédé d'adaptation lente de lien donne la meilleure efficacité spectrale. En outre, l'hypothèse « Genie Aided » n'est pas suffisamment précise et nécessite souvent des corrections.

**Caractéristiques principales de l'invention**

La présente invention a pour objet un procédé de transmission suivant la revendication 1 et un système selon la revendication 5.

D'autres modes de réalisation sont revendiqués par les revendications dépendantes 2 à 4.

Les liens entre les différents noeuds du système sont sujets à des évanouissements lents (slow fading) et à du bruit blanc Gaussien. La connaissance de tous les liens du système (CSI : Channel State Information) par la destination n'est pas disponible. En effet, les liens entre les sources, entre les relais, entre les relais et les sources n'est pas directement observable par la destination et nécessiterait un échange d'information trop important entre les sources, les relais et la destination. Pour limiter le coût de la surcharge de la voie de retour (feedback overhead), seule une information sur la distribution/statistique des canaux (CDI : Channel Distribution Information) de tous les liens, e.g. qualité moyenne (par exemple SNR moyen, SNIR moyen) de tous les liens, est supposée connue par la destination dans le but de déterminer les débits alloués aux sources.

Les sources indépendantes entre elles diffusent pendant la première phase leurs séquences d'informations codées sous forme de messages à l'attention d'un seul destinataire. Chaque source diffuse ses messages avec un débit initial. La destination communique à chaque source son débit initial via des canaux de contrôle à débit très limité. La destination détermine les débits initiaux à partir de sa connaissance des statistiques de tous les liens.

Les sources autres que celle qui émet et éventuellement les relais, de type *« Half Duplex »* reçoivent les messages successifs des sources, les décodent et, s'ils sont sélectionnés, génèrent un message uniquement à partir des messages des sources décodés sans erreur.

Les noeuds sélectionnés accèdent ensuite au canal de manière orthogonale en temps entre eux pendant la seconde phase pour transmettre leur message généré vers la destination.

La destination peut choisir quel noeud doit transmettre à un instant donné. Il est aussi possible que les noeuds de relayage suivent une séquence d'activation connue à l'avance par la destination et les relais. Dans le premier cas, la destination choisi toujours un noeud (source ou relais) qui a pu décoder au moins un message d'une source sans erreur.

La destination communique si nécessaire sa stratégie de sélection des noeuds vers les sources et vers les relais via des canaux de contrôle à débit limité.

Le procédé est tel que l'adaptation de lien est de type lent et contrairement à certaines techniques connues de transmission avec mise en oeuvre d'une stratégie de coopération IR-HARQ basée sur un relayage SDF, le procédé se place dans le contexte d'un système avec des débits qui peuvent être asymétriques entre les sources et met en oeuvre une stratégie pour maximiser l'efficacité spectrale moyenne au sein du système considéré sous-contrainte de respecter une qualité de service individuelle (QoS) par source i.e. un BLER individuel moyen par source.

Ce système est tel que la destination n'a pas la connaissance de la qualité instantanée des liens entre les sources, entre les sources et les relais, et entre les relais mais uniquement de la qualité instantanée des liens entre les sources et la destination et entre les relais et la destination.

Ainsi, la stratégie de coopération selon l'invention est telle que les sources et les relais coopèrent pour maximiser l'efficacité spectrale moyenne dans une situation plus proche de la réalité i.e. où il n'y a pas de symétrie imposée entre les débits.

Le système considéré est tel que les sources peuvent elle-même être des relais. Un relais se distingue d'une source car il n'a pas de message à transmettre qui lui soit propre i.e. il ne fait que retransmettre des messages provenant d'autres noeuds.

Le procédé distingue trois phases, une phase initiale et, pour chaque trame à transmettre, une 1$^{\text{ère}}$ phase et une 2$^{\text{nde}}$ phase.

Lors de la phase d'initialisation, la destination détermine un débit initial pour chaque source en prenant en compte la qualité (par exemple SNR) moyenne de chacun des liens du système.

La destination estime la qualité (par exemple SNR) des liens directs : source vers destination et relais vers destination selon des techniques connues basées sur l'exploitation de signaux de référence. La qualité des liens source - source, relais - relais et source - relais est estimée par les sources et les relais en exploitant par exemple ces mêmes signaux de référence. Les sources et les relais transmettent à la destination les qualités moyennes des liens. Cette transmission intervient avant la phase d'initialisation. Seule la valeur moyenne de la qualité d'un lienétant prise en compte, son rafraîchissement intervient à une échelle de temps longue c'est-à-dire sur un temps qui permet de moyenner les variations rapides (fast fading) du canal. Ce temps est de l'ordre du temps nécessaire pour parcourir plusieurs dizaines de longueur d'onde de la fréquence du signal transmis pour une vitesse donnée. La phase d'initialisation intervient par exemple toutes les 200 à 1000 trames. La destination remonte aux sources via une voie de retour les débits initiaux qu'elle a déterminés. Les débits initiaux restent constants entre deux occurrences de la phase d'initialisation.

Lors de la première phase, les $M$ sources transmettent successivement leur message pendant les $M$ intervalles de temps (time-slots) en utilisant respectivement des schémas de modulation et de codage déterminés à partir des débits initiaux.

Lors de la 2$^{\text{nde}}$ phase, les messages des sources sont transmis de façon coopérative par les relais et/ou par les sources. Cette phase dure au maximum $T_{max}$ intervalles de temps (time-slots).

La métrique d'utilité qui consiste en une efficacité spectrale est conditionnée à la stratégie de sélection des noeuds qui intervient pendant la deuxième phase.

Selon un mode de réalisation, le procédé comprend en outre une étape de calcul itératif des débits initiaux par la destination.

L'approche « Genie Aided » qui consiste à déterminer indépendamment chaque débit d'une source en supposant que tous les messages des autres sources sont connus de la destination et des relais conduit à des valeurs de débit initial pour chaque source qui ne sont pas suffisamment précis. Le calcul itératif permet de corriger ces valeurs initiales en prenant en compte la stratégie de sélection qui intervient pendant la deuxième phase ce que ne peut pas par nature l'approche « Genie Aided » seule.

Selon un mode de réalisation, la transmission coopérative d'un noeud lors de la seconde phase se traduit en l'émission d'une redondance basée sur un codage incrémental aux sources.

Selon un mode de réalisation, la stratégie de sélection des noeuds intervenant pendant la deuxième phase suit une séquence connue à l'avance par tous les noeuds.

Selon un mode de réalisation, l'étape de calcul itératif des débits initiaux prend en compte une stratégie de sélection des noeuds (stratégie avec sélection aléatoire, stratégie avec sélection cyclique, etc).

Selon un mode de réalisation, la stratégie de sélection des noeuds intervenant pendant la deuxième phase prend en compte une information provenant des noeuds indiquant leur jeu de sources correctement décodées.

Selon un mode de réalisation, la stratégie de sélection des noeuds intervenant pendant la deuxième phase correspond à chaque intervalle de temps à la sélection du noeud qui a décodé correctement au moins une source que la destination n'a pas décodée correctement à l'issue de l'intervalle de temps précédent et qui bénéficie de la meilleure qualité instantanée parmi les qualités instantanées de tous les liens entre les noeuds et la destination.

Selon un mode de réalisation de l'invention, le procédé de transmission des messages résulte d'une application logicielle découpée en plusieurs applications logicielles spécifiques mémorisées dans les sources, dans la destination et éventuellement dans les relais. La destination peut être par exemple le récepteur d'une station de base. L'exécution de ces applications logicielles spécifiques est apte à la mise en oeuvre du procédé de transmission.

L'invention a en outre pour objet un système comprenant $M$ sources, éventuellement $L$ relais, et une destination, $M > 1$, $L \geq 0$, pour une mise en oeuvre d'un procédé de transmission selon un objet précédent.

L'invention a en outre pour objet chacune des applications logicielles spécifiques sur un ou plusieurs supports d'information, lesdites applications comportant des instructions de programme adaptées à la mise en oeuvre du procédé de transmission lorsque ces applications sont exécutées par des processeurs.

L'invention a en outre pour objet des mémoires configurées comportant des codes d'instructions correspondant respectivement à chacune des applications spécifiques.

La mémoire peut être incorporée dans n'importe quelle entité ou dispositif capable de stocker le programme. La mémoire peut-être de type ROM, par exemple un CD ROM ou une ROM de circuit microélectronique, ou encore de type magnétique, par exemple une clé USB ou un disque dur.

D'autre part, chaque application spécifique selon l'invention peut être téléchargée depuis un serveur accessible sur un réseau de type Internet.

Les caractéristiques optionnelles présentées ci-dessus dans le cadre du procédé de transmission peuvent éventuellement s'appliquer à l'application logicielle et à la mémoire ci-dessus évoquées.

## Liste des figures

D'autres caractéristiques et avantages de l'invention apparaîtront plus clairement à la lecture de la description suivante de modes de réalisation, donnés à titre de simples exemples illustratifs et non limitatifs, et des dessins annexés, parmi lesquels :

- la figure 1 est un schéma d'un exemple de système dit Coopérative OMAMRC (Orthogonal Multiple Access Multiple Relays Channel) selon l'invention,
- la figure 2 est un schéma d'un cycle de transmission d'une trame qui peut être précédé d'une étape d'initialisation selon l'invention,
- la figure 3 est un schéma du système OMAMRC de la figure 1 pour lequel toutes les sources sauf la source $s_1$ sont considérées comme correctement décodées.

## Description de modes de réalisation particuliers

Une utilisation du canal (channel use) est la plus petite granularité en ressource temps-fréquence défini par le système qui permet la transmission d'un symbole modulé. Le nombre d'utilisations du canal est lié à la bande de fréquence disponible et à la durée de transmission.

Dans le cas « slow fading » privilégié dans la description, les gains d'évanouissement sont constants pendant les $M + T_{max}$ intervalles de temps où $M + T_{max}$ est le nombre maximal d'intervalles de temps pour accomplir un cycle de transmission.

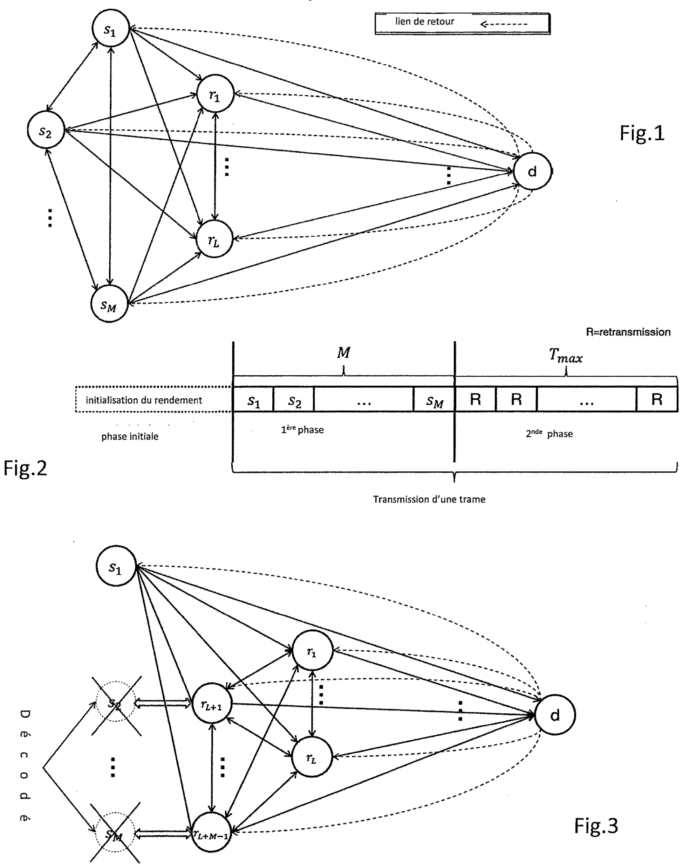

Un mode de réalisation de l'invention est décrit dans le contexte d'un système OMAMRC illustré par la figure 1 et à l'appui du schéma de la figure 2 qui illustre un cycle de transmission d'une trame.

Ce système comprend M sources qui appartiennent au jeu de sources $\mathcal{S} = \{s_1, \ldots, s_M\}$, $L$ relais qui appartiennent au jeu de relais $\mathfrak{R} = \{r_1, \ldots, r_L\}$ et une destination $d$. Chaque source du jeu $\mathcal{S}$ communique avec l'unique destination avec l'aide des autres sources (user coopération) et des relais qui coopèrent

A titre de simplification de la description, les suppositions suivantes sont faites par la suite sur le système OMAMRC :

- les sources, les relais sont équipés d'une seule antenne d'émission ;
- les sources, les relais, et la destination sont équipés d'une seule antenne de réception ;
- les sources, les relais, et la destination sont parfaitement synchronisés ;
- les sources sont statistiquement indépendantes (il n'y a pas de corrélation entre elles) ;

- tous les noeuds émettent avec une même puissance ;
- il est fait usage d'un code CRC supposé inclus dans les $K_s$ bits d'information de chaque source $s$ pour déterminer si un message est correctement décodé ou pas ;
- les liens entre les différents noeuds souffrent de bruit additif et d'évanouissement. Les gains d'évanouissement sont fixes pendant la transmission d'une trame effectuée pendant une durée maximale $M + T_{max}$ intervalles de temps, mais peuvent changer indépendamment d'une trame à une autre. $T_{max} \geq 2$ est un paramètre du système ;
- la qualité instantanée du canal/lien direct en réception (CSIR Channel State Information at Receiver) est disponible à la destination, aux sources et aux relais ;
- les retours sont sans erreur (pas d'erreur sur les signaux de contrôle) ;
- la durée des intervalles de temps est variable.

Les noeuds comprennent les relais et les sources qui peuvent se comporter comme un relais quand elles n'émettent pas leur propre message.

Les noeuds, $M$ sources et $L$ relais, accèdent au canal de transmission selon un schéma d'accès multiple orthogonal qui leur permet d'écouter sans interférence les transmissions des autres noeuds. Les noeuds fonctionnent selon un mode half-duplex.

Les notations suivantes sont utilisées :

- $x_{a,k} \in \mathbb{C}$ est le symbole modulé codé pour l'utilisation du canal $k$ émis par le noeud

$$a \in \mathcal{S} \cup \mathfrak{R},$$

- $y_{a,b,k}$ est le signal reçu au noeud

$$b \in \mathcal{S} \cup \mathfrak{R} \cup \{d\} \backslash \{a\}$$

correspondant à un signal émis par le noeud

$$a \in \mathcal{S} \cup \mathfrak{R},$$

- $\gamma_{a,b}$ est le rapport signal à bruit moyen (SNR) qui prend en compte les effets d'atténuation du canal (path-loss) et de masquage (shadowing),
- $h_{a,b}$ est le gain d'atténuation du canal (fading) qui suit une distribution Gaussienne complexe circulaire symétrique à moyenne nulle et de variance $\gamma_{d,b}$, les gains sont indépendants entre eux,
- $n_{a,b,k}$ sont des échantillons d'un bruit blanc Gaussien (AWGN) distribués de manière identique et indépendante qui suivent une distribution Gaussienne complexe de symétrie circulaire à moyenne nulle et de variance unitaire.

Le signal reçu au noeud

$$b \in \mathcal{S} \cup \mathfrak{R} \cup \{d\} \backslash \{a\}$$

correspondant au signal émis par le noeud

$$a \in \mathcal{S} \cup \mathfrak{R}$$

peut s'écrire :

$$y_{a,b,k} = h_{a,b} x_{a,k} + n_{a,b,k} \qquad (1)$$

Pendant la première phase de $M$ intervalles de temps, chaque source émet ses mots de code pendant $N_1$ utilisations du canal, $k \in \{1, \dots , N_1\}$. Pendant la seconde phase de $T_{max}$ intervalles de temps, chaque noeud sélectionné émet une information représentative des messages des sources décodées sans erreur par ce noeud pendant $N_2$ utilisations du canal, $k \in \{1, \ldots, N_2\}$.

En exploitant des signaux de référence (symboles pilotes, signaux SRS du 3GPP LTE, etc), la destination peut déterminer les gains (CSI Channel State Information) des liens directs : $\boldsymbol{h}_{dir} = \{h_{s_1d}, \ldots, h_{s_M,d}, h_{r_1,'d}, \ldots, h_{r_L,d}\}$, c'est-à-dire des liens source vers destination et relais vers destination et peut donc en déduire les SNR moyens de ces liens.

Par contre, les gains des liens entre sources, des liens entre relais et des liens entre sources et relais ne sont pas connus de la destination. Seuls les sources et les relais peuvent estimer une métrique de ces liens en exploitant des signaux de référence de manière similaire à celle utilisée pour les liens directs. Compte tenu que les statistiques des canaux sont supposés constantes entre deux phases d'initialisation, la transmission à la destination des métriques par les sources et les relais peut n'intervenir qu'à la même cadence que la phase d'initialisation. La statistique du canal de chaque lien est supposée suivre une distribution Gaussienne complexe circulaire centrée et les statistiques sont indépendantes entre les liens. Il est par suite suffisant de ne considérer que le SNR moyen comme mesure de la statistique d'un lien.

Les sources et les relais remontent donc à la destination des métriques représentatives des SNR moyens des liens qu'ils peuvent observer.

La destination connait ainsi le SNR moyen de chacun des liens.

Pendant une phase initiale d'adaptation de lien qui précède la transmission de plusieurs trames, la destination remonte pour chaque source une valeur représentative (index, MCS, débit, etc) d'un débit initial. Chacun des débits initiaux détermine de manière non ambiguë un schéma de modulation et de codage (MCS, Modulation and Coding Scheme) initial ou inversement chaque MCS initial détermine un débit initial.

Ces débits initiaux sont déterminés par la destination de façon à maximiser une efficacité spectrale moyenne conditionnée à la stratégie de sélection des noeuds intervenant pendant la deuxième phase et sous contrainte d'un BLER individuel moyen pour chaque source. La remontée des débits initiaux est effectuée via des canaux de contrôle à débit très limité. La maximisation est typiquement réalisée sous contrainte des SNR moyens des liens du système.

Chaque source transmet à la destination ses données mises en trame avec l'aide des autres sources et des relais.

Une trame occupe des intervalles de temps (time slots) lors de la transmission des $M$ messages des respectivement $M$ sources. La transmission d'une trame (qui définit un cycle de transmission) se déroule pendant $M + T_{max}$ intervalles de temps : $M$ intervalles pour la 1ère phase, $T_{max}$ intervalles pour la 2e phase.

Pendant la première phase, chaque source $s \in \mathcal{S} = \{s_1, \ldots, s_M\}$ transmet après codage un message $u_s$ comportant $K_s$ bits d'information $u_s \in \mathbb{F}_2^{K_s}$, $\mathbb{F}_2$, étant le corps de Galois à deux éléments. Le message $u_s$ comprend un code de type CRC qui permet de vérifier l'intégrité du message $u_s$. Le message $u_s$ est codé selon le MCS initial. Compte tenu que les MCS initiaux peuvent être différents entre les sources, les longueurs des messages codés peuvent être différentes entre les sources. Le codage utilise un code à redondance incrémentale. Le mot de code obtenu est segmenté en blocs de redondance. Le code à redondance incrémentale peut être de type systématique, les bits d'information sont alors inclus dans le premier bloc. Que le code à redondance incrémentale soit ou pas de type systématique, il est tel que le premier bloc peut être décodé de manière indépendante des autres blocs. Le code à redondance incrémentale peut être réalisé par exemple au moyen d'une famille finie de codes linéaires poinçonnés à rendements compatibles ou de codes sans rendement modifiés pour fonctionner avec des longueurs finies : code raptor (RC), turbo code poinçonné de rendement compatible (RCPTC rate compatible punctured turbo code), code convolutionnel poinçonné de rendement compatible (RCPCC rate compatible punctured convolutional code), LDPC de rendement compatible (RCLDPC rate compatible low density parity check code).

Lors de la première phase, les $M$ sources transmettent successivement leur message pendant les $M$ intervalles avec respectivement des schémas de modulation et de codage déterminés à partir des débits initiaux. Chaque intervalle de temps comprend $N_1$ utilisations (channel uses) du canal telles que la ressource temporelle est partagée de manière égale entre les sources.

Chaque message transmis correspondant à une source $s_1, \ldots, s_M$, un message correctement décodé est assimilé à la source correspondante par abus de notation.

Lorsqu'une source émet, les autres sources et les relais écoutent et tentent de décoder les messages reçus à la fin de chaque time-slot. Le succès du décodage est décidé en utilisant le CRC.

Lors de la seconde phase, le noeud sélectionné, source ou relais, agit comme un relais en coopérant avec les sources pour aider la destination à décoder correctement les messages de toutes les sources. Le noeud sélectionné transmet i.e. il coopère en transmettant les mots ou une partie des mots qu'il a correctement décodés. La seconde phase comprend au maximum $T_{max}$ intervalles de temps (slots temporels) appelés rounds. Chaque round $t \in \{1, \ldots, T_{max}\}$ a une durée de $N_2$ utilisations du canal.

Pendant cette phase, la destination suit une certaine stratégie pour décider du noeud qui émet à chaque intervalle de temps (round). La destination informe les noeuds en utilisant un canal de contrôle à débit limité (limited feedback) pour transmettre un message de retour. Ce message de retour est basé sur son résultat de décodage des trames reçues. La destination contrôle ainsi la transmission des noeuds en utilisant ces messages de retour ce qui permet d'améliorer l'efficacité spectrale et la fiabilité en augmentant la probabilité de décodage de toutes les sources par la destination.

Si le décodage de toutes les sources est correct le retour est un message de type *ACK*. Dans ce cas un cycle de transmission d'une nouvelle trame débute avec l'effacement des mémoires des relais et de la destination et avec la transmission par les sources de nouveaux messages.

Si le décodage d'au moins une source est erroné le message de retour est typiquement un *NACK*. Chaque noeud

$$a \in \mathcal{S} \cup \mathfrak{R}$$

transmet son jeu de sources correctement décodées à l'issue de l'intervalle de temps (round) précédent noté $\mathcal{S}_{a,t-1}$.

Par convention, on note $\mathcal{S}_{b,t} \subseteq \mathcal{S}$ le jeu des messages (ou sources) correctement décodés par le noeud

$$b \in \mathcal{S} \cup \mathfrak{R} \cup \{d\}$$

à la fin de l'intervalle t de temps (round t), t E $\{0, \dots , T_{max}\}$. La fin de l'intervalle de temps (round) t = 0 correspond à la fin de la première phase. Le nombre d'intervalle de temps (time-slots) utilisés pendant la seconde phase $t_{used}$ = {1, ..., $T_{max}$} dépend du succès de décodage à la destination.

Le noeud sélectionné transmet des parités déterminées à partir des messages de son jeu de sources correctement décodées en utilisant un codage réseau et un codage canal conjoints (Joint Network Channel Coding). Cette transmission intervient pendant un intervalle de temps de $N_2$ utilisations du canal. Les autres noeuds et la destination peuvent améliorer leur propre décodage en exploitant la transmission du noeud sélectionné et mettre à jour en conséquence leur jeu de sources correctement décodées.

Le débit initial de transmission d'une source s est $R_s = K_s/N_1$ en bits par dimension complexe (b.c.u). Le débit sur le long terme $\overline{R}_s$ d'une source est défini comme le nombre de bits transmis par rapport au nombre total d'utilisations du canal pour un nombre de trames transmises qui tend vers l'infini :

$$\overline{R}_s = \frac{R_s}{M + \alpha \mathbb{E}(T)} \tag{2}$$

avec $\mathbb{E}(T) = \sum_{t=1}^{T_{max}} t Pr\{T = t\}$ le nombre moyen d'intervalles de temps (rounds) de retransmission utilisés pendant la seconde phase et avec $\alpha = N_2/N_1$.

L'efficacité spectrale peut être définie comme la somme d'efficacités spectrales individuelles :

$$\eta = \sum_{i=1}^{M} \overline{R}_{s_i} \left(1 - Pr\{\mathcal{O}_{s_i,T_{max}}\}\right) \tag{3}$$

avec $\mathcal{O}_{s,T_{max}}$ l'événement que la source s ne soit pas décodée correctement par la destination à l'issue de l'intervalle de temps (round) $T_{max}$, appelé dans la suite événement de coupure individuel (individual outage event) de la source s à l'issue de l'intervalle de temps (round) $T_{max}$.

En général, l'événement de coupure individuel de la source s à l'issue de l'intervalle de temps (round) t, $\mathcal{O}_{s,t(a_t,} \mathcal{S}_{a,t-1}|\boldsymbol{h}_{dir,} \mathcal{P}_{t-1})$ dépend du noeud sélectionné $a_t \in \mathcal{N} = \mathcal{S} \cup \mathcal{R}$ et du jeu associé de sources décodées $\mathcal{S}_{a,t-1}$. Et ceci de manière conditionnelle à la connaissance des gains des canaux directs $\boldsymbol{h}_{dir}$ et de $\mathcal{P}_{t-1}$. $\mathcal{P}_{t-1}$ est le jeu comprenant tous les noeuds $\hat{a}_l$ qui ont été sélectionnés aux intervalles de temps (rounds) $l \in \{1, \dots t - 1\}$ précédents l'intervalle de temps (round) t ainsi que leur jeu de décodage associé $\mathcal{S}_{\hat{a}_l,l-1}$ et que le jeu de décodage de la destination

$\mathcal{S}_{d,t-1}.$

L'événement de coupure commune (common outage event) à l'issue de l'intervalle de temps (round) $t$, $\varepsilon_t(a_t, \mathcal{S}_{a,t-1}|\boldsymbol{h}_{dir}, \mathcal{P}_{t-1})$ est défini comme étant l'événement qu'au moins une source ne soit pas décodée correctement par la destination à l'issue de l'intervalle de temps (round) $t$.

La probabilité de l'événement de coupure individuel de la source $s$ à l'issue de l'intervalle de temps (round) $t$ pour un noeud candidat $a_t$ peut être exprimée sous la forme :

$$\mathbb{E}\left(\mathbf{1}_{\{\mathcal{O}_{s,t}(a_t, \mathcal{S}_{a_t,t-1}|\boldsymbol{h}_{dir}, \mathcal{P}_{t-1})\}}\right)$$

avec $\mathbb{E}(.)$ l'opérateur d'espérance et telle que $\mathbf{1}_{\{\mathcal{V}\}}$ prend la valeur 1 si l'événement V est vrai et la valeur 0 sinon.

La probabilité de l'événement de coupure commune peut être définie de la même manière. Dans la suite la dépendance à la connaissance de $\boldsymbol{h}_{dir}$ et de $\mathcal{P}_{t-1}$ est omise par souci de simplification des notations.

L'événement de coupure commune d'un jeu de sources intervient quand le vecteur de leur débit est en dehors de la région de capacité MAC correspondante.

Pour certains sous-jeux de sources $\mathcal{B} \subseteq \bar{\mathcal{S}}_{d,t-1}$ avec $\bar{\mathcal{S}}_{d,t-1} = \mathcal{S} \backslash \mathcal{S}_{d,t-1}$ le jeu de sources non décodées correctement par la destination à l'issue de l'intervalle de temps (round) $t$ - 1, l'événement de coupure commune peut s'exprimer sous la forme :

$$\mathcal{E}_{t,\mathcal{B}}(a_t, \mathcal{S}_{a_t,t-1}) = \bigcup_{\mathcal{U} \subseteq \mathcal{B}} \mathcal{F}_{d,\mathcal{B}}(\mathcal{U}) \tag{4}$$

telle que les sources qui appartiennent à $\mathcal{I} = \bar{\mathcal{S}}_{d,t-1} \backslash \mathcal{B}$ sont considérées comme des interférences. $\mathcal{F}_{d,\mathcal{B}}(\mathcal{U})$ traduit le non-respect de l'inégalité MAC associée au débit somme des sources contenues dans $\mathcal{U}$ :

$$\mathcal{F}_{d,\mathcal{B}}(\mathcal{U}) = \left\{ \sum_{s \in \mathcal{U}} R_s > \sum_{s \in \mathcal{U}} I_{s,d} + \sum_{l=1}^{t-1} \alpha\, I_{\hat{a}_l,d} \mathbf{1}_{\{\mathcal{C}_{\hat{a}_l,s}\}} + \alpha I_{a_t,d} \mathbf{1}_{\{\mathcal{C}_{a_t,s}\}} \right\} \tag{5}$$

où

$$\mathcal{C}_{\hat{a}_l,s} = \left\{ \{ s \in \mathcal{S}_{\hat{a}_l,l-1} \cap \mathcal{U}\} \wedge \{\mathcal{S}_{\hat{a}_l,l-1} \cap \mathcal{I} = \emptyset\} \right\}, \quad \mathcal{C}_{a_t,s} = \left\{ \{ s \in \mathcal{S}_{a_t,t-1} \cap \mathcal{U}\} \wedge \{\mathcal{S}_{a_t,t-1} \cap \mathcal{I} = \emptyset\} \right\}$$

avec $\wedge$ qui représente l'opérateur logique,
$I_{a,b}$ dénote l'information mutuelle entre les noeuds $a$ et $b$, $\hat{a}_l$, $l$ = 1 à $t$ - 1 un noeud déjà sélectionné.

Le facteur $\alpha$ permet de normaliser avant addition les deux termes associés respectivement aux deux phases pour lesquelles les intervalles de temps ont des durées respectives $N_1$ et $N_2$ utilisations du canal (channel use).

L'événement de coupure individuelle de la source $s$ à l'issue de l'intervalle de temps (round) t peut s'écrire :

$$\mathcal{O}_{s,t}(a_t, \mathcal{S}_{a_t,t-1}) = \bigcap_{\mathcal{I} \subset \bar{\mathcal{S}}_{d,t-1}} \bigcup_{\mathcal{U} \subseteq \bar{\mathcal{I}}: s \in \mathcal{U}} \left\{ \sum_{s \in \mathcal{U}} R_s > \sum_{s \in \mathcal{U}} I_{s,d} + \sum_{l=1}^{t-1} \alpha\, I_{\hat{a}_l,d} \mathbf{1}_{\{\mathcal{C}_{\hat{a}_l,s}\}} + \alpha I_{a_t,d} \mathbf{1}_{\{\mathcal{C}_{a_t,s}\}} \right\}$$

où $\bar{\mathcal{I}} = \bar{\mathcal{S}}_{d,t-1} \backslash \mathcal{I}$ et $\mathcal{C}_{\hat{a}_l,s}$ et $\mathcal{C}_{a_t,s}$ ont la même expression que pour (5).

La destination met en oeuvre selon l'invention une adaptation de lien de type lent. Cette adaptation consiste à maximiser une métrique d'utilité moyenne après un nombre $X \le T_{max}$ de retransmissions (transmissions coopératives) intervenant pendant la seconde phase sous contrainte d'un BLER individuel moyen pour chaque source. La métrique d'utilité est une efficacité spectrale moyenne conditionnée à la stratégie de sélection des noeuds intervenant pendant cette deuxième phase.

Selon une première classe de stratégies, la sélection des noeuds pris parmi les sources et les relais dépend des jeux des sources correctement décodées par les noeuds. Un exemple considéré dit stratégie préférée est basé sur une sélection de type IR-HARQ qui vise à maximiser l'efficacité spectrale. Selon cette stratégie préférée, à l'intervalle de temps (round) *t* de la deuxième phase la destination choisit le noeud avec la meilleure qualité instantanée du lien entre elle-même et ce noeud (par exemple la plus grande information mutuelle entre elle-même et ce noeud) pris parmi tous les noeuds qui ont pu décoder correctement au moins une source du jeu $\bar{\mathcal{S}}_{d,t-1}$, ces noeuds étant dits éligibles. Cette stratégie permet d'atteindre un bon compromis entre la complexité de calcul et les performances mais au détriment d'un nombre important de signaux de contrôle.

Selon une deuxième classe de stratégies, la sélection des noeuds pris parmi les sources et les relais ne dépend pas des jeux des sources correctement décodées par les noeuds. Selon cette classe la sélection est déterminée et connue de tous les noeuds. Un exemple considéré est tel que la séquence de sélection est cyclique et tel que le noeud sélectionné n'est sélectionné que parmi les relais. Selon cet exemple, chaque relais bénéficie d'au moins un intervalle de temps (round) dédié pendant la seconde phase pour transmettre. Pour ne pas privilégier un relais par rapport à un autre, la séquence change à chaque trame. Selon cet exemple, seul un bit de retour depuis la destination suffit pour remonter un message ACK/NACK commun.

Lors de la première phase, chaque source *s* émet avec le débit initial $R_s$.

Soit $BLER_{s,X}(R_s)$ la probabilité moyenne d'avoir le message de la source *s* non décodés correctement après X intervalles de temps (rounds) de la seconde phase.

Dans une transmission point à point, le débit (throughput) individuel de la source est donné par :

$$R_s \left( 1 - BLER_{s,X}(R_s) \right)$$

Et pour optimiser ce débit, la méthode habituelle consiste à trouver la paire optimale $(R_s, BLER_{s,X}(R_s))$.

Une telle méthode habituelle n'est pas utilisable pour un système à *M* sources, éventuellement *L* relais, et une destination avec un schéma d'accès multiple orthogonal du canal de transmission puisque le $BLER_{s,X}$ est dépendant de tous les débits $(R_1, ..., R_M)$. Ceci vient du fait que le jeu de décodage du noeud sélectionné à l'intervalle de temps (round) courant dépend de tous les débits et que ceux-ci influencent la probabilité de décodage incorrect du message de la source *s*.

Afin de ne pas surcharger les notations nous distinguons $R_{s_i}$ le débit de la source $s_i$ après optimisation de $R_i$ qui est une valeur possible de $R_{s_i}$ dans l'ensemble du jeu des débits possibles $\{\overline{R}_1, ..., \overline{R}_{n_{MCS}}\}$. $n_{MCS}$ est le nombre de MCS différents. Le procédé selon l'invention est une solution au problème d'optimisation suivant :

$$\left( R_{s_1}, ..., R_{s_M} \right) = \operatorname*{argmax}_{(R_1,...,R_M) \in \{\overline{R}_1,...,\overline{R}_{n_{MCS}}\}^M} \sum_{i=1}^{M} \frac{R_i}{M + \alpha \mathbb{E}(X_{used})} \left( 1 - Pr\{\mathcal{O}_{s_i,X}\} \right) \quad (7)$$

sous contrainte que $Pr\{\mathcal{O}_{s,X}\} \le QoS_s, \forall s \in \mathcal{S}$.

Dans la relation (7), $X_{used}$ est une variable aléatoire qui représente le nombre d'intervalles de temps (rounds) utilisés pendant la seconde phase $X_{used} \le X$. La distribution de $X_{used}$ dépend de $(R_1, ..., R_M)$ ainsi que de $Pr\{\mathcal{O}_{s_i,X}\}$ ce qui rend l'optimisation (7) multidimensionnelle de cardinalité $n_{MCS}^M$ soit 3375 M-tuple $(R_1, ..., R_M)$ possibles pour une famille de quinze MCS et de trois sources. Une recherche exhaustive devient très vite impossible lorsque le nombre de sources augmente.

L'approche dite « Genie Aided » consiste à faire l'hypothèse lors de l'étape d'initialisation que toutes les sources *s* sauf la source $s_i$ dont on veut initialiser le débit sont considérées comme correctement décodées, $s \in \mathcal{S}/s_i = \{s_1, s_2, ..., s_{i-1}, s_{i+1}, ..., s_M\}$. Toutes les sources $\{s_1, s_2, ..., s_{i-1}, s_{i+1}, ..., s_M\}$ autres que $s_i$ agissent comme des relais notés $\{r_{L+1}, ..., r_{L+M-1}\}$. Pour la source $s_i$ considérée, le réseau est un réseau à relais multiples noté $(1, L + M - 1, 1)$ et non plus un réseau à relais multiples et utilisateurs multiples. Le système correspondant est illustré par le schéma de la figure 3 lorsque $s_i = s_1$.

Selon l'invention, cette approche est complétée avec la prise en compte de la qualité de tous les liens qui peuvent aider à la transmission de la source $s_i$. Ce procédé donne une solution plus précise en particulier dans le cas d'une connaissance a priori de la séquence de sélection des noeuds intervenant lors de la seconde étape.

Compte tenu de la simplification du réseau (1, *L* + *M* - 1,1), la recherche du débit maximum $R_{s_i}$ pour la source $s_i$ sous l'hypothèse « Genie Aided » peut s'écrire sous la forme :

$$R_{s_i} = \underset{R_i \in \left\{ \bar{R}_1, ..., \bar{R}_{n_{MCS}} \right\}}{\text{argmax}} \left\{ \frac{R_i}{M + \alpha \mathbb{E}(X_{used, R_i})} \left( 1 - \int \left[ R_i > I_{s_i, d} + \sum_{l=1}^{X} \alpha I_{\hat{a}_l, d} \mathbf{1}_{\left\{ s_i \in \mathcal{S}_{\hat{a}_l, l-1} \right\}} \right] P(H) dH \right) \right\} \quad (8)$$

tel que $Pr\{\mathcal{O}_{s_i, X}\} \leq QoS_{s_i}$

Il apparait clairement dans l'équation (8) que le débit $R_{s_i}$ sous l'hypothèse « Genie Aided » dépend du noeud sélectionné $\hat{a}_l$ à l'intervalle de temps (round) *l*. Pour déterminer une borne supérieure sur le débit $R_{s_i}$ sous l'hypothèse « Genie Aided » pour la source $s_i$, il suffit de choisir la stratégie optimale de sélection des noeuds sous l'hypothèse « Genie Aided » pour cette même source $s_i$. Celle-ci est décrite par l'algorithme 3 de l'annexe A.

Par ailleurs, le calcul de l'optimisation (8) est donné par l'algorithme 1 de l'annexe A. Chaque valeur de débit du jeu des débits possibles $\{\bar{R}_1, ..., \bar{R}_{n_{MCS}}\}$ est considérée l'une après l'autre selon une première boucle sur j. $n_{MCS}$ est le nombre de schémas de modulation et de codage. Une deuxième boucle sur *cnt* permet de moyenner le *BLER* individuel ou $Pr\{\mathcal{O}_{s, X}\}$ sur *Nb_MC* tirages de canaux selon les statistiques données par les SNR moyens de tous les liens. Ainsi, à l'intérieure de la boucle *cnt* tous les canaux sont connus résultant d'un tirage aléatoire. Il suffit par la suite de calculer l'équation (8) selon une approche Monte-Carlo où l'intégrale est remplacée par une somme :

$$\int \left[ R_i > I_{s_i, d} + \sum_{l=1}^{X} \alpha I_{\hat{a}_l, d} \mathbf{1}_{\left\{ s_i \in \mathcal{S}_{\hat{a}_l, l-1} \right\}} \right] P(H) dH$$

$$= \frac{1}{Nb\_MC} \sum_{cnt=1}^{Nb\_MC} \left[ R_i > I_{s_i, d}(\boldsymbol{H}_{cnt}) + \sum_{l=1}^{X} \alpha I_{\hat{a}_l, d}(\boldsymbol{H}_{cnt}) \mathbf{1}_{\left\{ s_i \in \mathcal{S}_{\hat{a}_l, l-1} \right\}} \right]$$

et où la variable *out* correspond à :

$$out = \sum_{cnt=1}^{Nb\_MC} \left[ R_i > I_{s_i, d}(\boldsymbol{H}_{cnt}) + \sum_{l=1}^{X} \alpha I_{\hat{a}_l, d}(\boldsymbol{H}_{cnt}) \mathbf{1}_{\left\{ s_i \in \mathcal{S}_{\hat{a}_l, l-1} \right\}} \right]$$

Pour déterminer une approximation moyenne du débit que la source $s_i$ peut utiliser sous l'hypothèse « Genie Aided », une stratégie de sélection aléatoire du noeud $\hat{a}_l$ (parmi tous les noeuds de relayage et pour chaque intervalle de temps (round) *l*) est adoptée. Celle-ci se concrétise durant l'étape 11 de l'algorithme 1 de l'Annexe A et consiste en une sélection aléatoire du noeud $\hat{a}_x$ parmi tous les noeuds de relayage possibles.

Pour déterminer les meilleurs débits initiaux que toutes les sources peuvent utiliser, un mode de réalisation du procédé selon l'invention selon lequel la détermination des débits initiaux par la destination comprend une étape de calcul itératif peut suivre le déroulement donné en Annexe A, algorithme 2. Cet algorithme prend comme point de départ les débits initiaux sous l'hypothèse « Genie Aided » et une stratégie de sélection particulière (par exemple sélection aléatoire). La borne supérieure repose sur la stratégie de sélection donnée par l'algorithme 3 qui peut être utilisée pour minimiser le nombre de calcul (aucun débit supérieur à celui donné par la borne supérieure « Genie Aided » pour une source *s* ne doit être testé pour cette même source) ou même comme point de départ pour l'algorithme 2.

Selon l'algorithme 2, tous les débits des sources sont mis à jour d'une façon cyclique. Le débit d'une source $s_i$ est fonction des débits des sources ayant un index *i'* inférieur à *i*, *i'* < *i*, mis à jour dans la même itération et des débits mis à jour pour la dernière fois lors de l'itération précédente pour les sources ayant un index *i''* supérieur à *i*, *i''* > *i*. La mise à jour à chaque itération *t* du débit d'une source $s_i$, *i* ∈ {1, ..., *M*}, consiste à partir du débit calculé à l'itération précédente, $R_{s_i}(t - 1)$, à vérifier si l'efficacité spectrale augmente ou diminue en augmentant la valeur du débit $R_{s_i}(t)$ à la valeur juste supérieure (les valeurs de débit étant quantifiée).

Si l'efficacité spectrale augmente alors l'augmentation de la valeur de débit est poursuivie jusqu'à ce que l'efficacité spectrale diminue. La valeur de débit retenue $R_{s_i}(t)$ est celle juste avant que l'efficacité spectrale diminue.

Si l'efficacité spectrale diminue lorsque le débit $R_{s_i}(t)$ est augmenté pour la première fois alors la valeur du débit est diminuée jusqu'à ce que l'efficacité spectrale diminue. La valeur de débit retenue $R_{s_i}(t)$ est celle juste avant que l'efficacité spectrale diminue.

Toute diminution ou augmentation du débit est bornée par la borne supérieure telle que déterminée par l'algorithme 3.

Références :

[1] A. Mohamad, R. Visoz and A. O. Berthet, "Cooperative Incremental Redundancy Hybrid Automatic Repeat Request Strategies for Multi-Source Multi-Relay Wireless Networks," IEEE Commun. Lett., vol. 20, no. 9, pp. 1808-1811, Sept. 2016.

Annexe A

**Alg.1 – Simulation Monte-Carlo pour déterminer les débits sous l'hypothèse « Genie Aided » :**

1.  **1<sup>ère</sup> boucle :** sélectionner de manière séquentielle le débit candidat $R_j$ possible qui n'a pas encore été considéré dans le jeu $\{\bar{R}_1, \ldots, \bar{R}_{n_{MCS}}\}$. Si tous les débits ont été considérés aller à fin 1<sup>ère</sup> boucle.

2.  Initialisation du compteur *out* des réalisations Monte-Carlo (de matrice de canaux $\boldsymbol{H}$) qui conduisent à une coupure : $out = 0$, du compteur $\bar{X}_{used}$ du nombre d'intervalles de temps (rounds) cumulés utilisés pendant la deuxième phase : $\bar{X}_{used} = 0$, de l'ensemble $\mathcal{S}_{d,0} = \mathcal{S}\backslash s_i$ selon l'hypothèse « Genie Aided ».

3.  **2<sup>e</sup> boucle :** sélectionner de manière séquentielle le compteur *cnt* de la réalisation courante d'une simulation Monte-Carlo : $1 \leq cnt \leq Nb\_MC$ avec $Nb\_MC$ le nombre maximum de réalisations Monte-Carlo, par exemple $Nb\_MC = 1000$. Si le compteur a atteint le nombre maximal $cnt > Nb\_MC$ aller à fin 2<sup>e</sup> boucle.

4.  déterminer $\boldsymbol{H}_{cnt}$ sur la base de $P(\boldsymbol{H})$ la probabilité conjointe des réalisations des canaux de tous les liens $h_{a,b}$.

5.  calculer $I_{a,b}(\boldsymbol{H}_{cnt})$ pour tous les liens

6.  si $R_j \leq I_{s_i,d}$ alors

7.  $\mathcal{S}_{d,0} = \mathcal{S}_{d,0} \cup \{s_i\}$,

8.  continue, (pas de changement des valeurs des compteurs *out* et $\bar{X}_{used}$ ).

9.  fin du si

10. 3<sup>e</sup> boucle : pour chaque intervalle de temps (round), $x = 1$ à $X$

11. sélection du nœud $\hat{a}_x$ par la destination en appliquant une stratégie de sélection (par exemple **Alg.3 pour une borne sup** ou sélection aléatoire)

12. calculer $C_2 = I_{s_i,d} + \sum_{k=1}^{x} \alpha I_{\hat{a}_k,d} \mathbf{1}_{\{s_i \in S_{\hat{a}_k,k-1}\}}$

13. si $R_j \leq C_2$ alors

14. $X_{used} = x$. (le nombre d'intervalles de temps (rounds) utilisés dans la réalisation courante de la simulation Monte-Carlo)

15. *break*, (pas de changement de la valeur du compteur *out*)

16. fin du si

17. si $x = X$ alors

18. $out = out + 1$

19. $X_{used} = X$.

20. fin du si

21. fin de la 3<sup>e</sup> boucle

22. $\bar{X}_{used} = \bar{X}_{used} + X_{used}$

23. fin de la 2$^e$ boucle

24. déterminer la probabilité de coupure moyenne de la source $s_i$ pour le débit $R_j$ :

$$P_{s_i,R_j}^{out} = \frac{out}{Nb\_MC}$$

25. déterminer le nombre moyen d'intervalles de temps (rounds) utilisés pendant la deuxième phase :

$$\mathbb{E}\left(X_{used,R_j}\right) = \frac{\bar{X}_{used}}{Nb\_MC}$$

26. fin de la 1$^{ère}$ boucle

27. choisir le débit maximum $R_{s_i}$ que la source $s_i$ peut utiliser :

$$R_{s_i} = \underset{R_j \in \{\bar{R}_1,\ldots,\bar{R}_{n_{MCS}}\}}{\text{argmax}} \left\{ \frac{R_j}{M + \alpha\mathbb{E}\left(X_{used,R_j}\right)}\left(1 - P_{s_i,R_j}^{out}\right) \right\}$$

tel que $P_{s_i,R_j}^{out} \leq QoS_{s_i}$.

**Alg.2 – Procédure itérative de correction des débits « Genie Aided » :**

1. initialisation du compteur d'itérations : $t = 0$,

2. initialisation des débits des sources en utilisant une approche dite « Genie Aided » conditionnée à une sélection de nœuds aléatoire,

3. tant que $\left(\left|R_{s_i}(t) - R_{s_i}(t-1)\right| > 0, \forall i \in \{1,\ldots,M\}\right)$ faire

4. incrémenter le compteur d'itérations : $t = t + 1$

5. pour chaque source $s_i$, $i \in \{1,\ldots,M\}$ faire

6. en considérant les débits déjà déterminés des sources : $\left(R_{s_1}(t),\ldots,R_{s_{i-1}}(t),R_{s_{i+1}}(t-1),\ldots,R_{s_M}(t-1)\right)$, mettre à jour la valeur de débit $R_{s_i}(t)$ de la source $s_i$ telle que $BLER_{s_i} \leq QoS_{s_i}$ . Rem1. La valeur de $R_{s_i}(t)$ est différente de $R_{s_i}(t-1)$ ssi $BLER_{s_i} \leq QoS_{s_i}$ et l'efficacité spectrale moyenne à augmenter. Rem 2 : le calcul des $BLER$ individuels moyens ainsi que de l'efficacité spectrale suit une approche Monte-Carlo sans hypothèse « Genie Aided ».

7. fin du pour

8. fin du tant que

**Alg.3 – Stratégie de sélection optimale sous l'hypothèse « Genie Aided » :**

1. Boucle : déterminer le jeu de décodage de chaque nœud candidat $a_x \in \mathcal{S} \cup \mathfrak{N}$ à l'issue de l'intervalle de temps (round) $x - 1$.

2. Initialisation « Genie Aided » : $\mathcal{S}_{a_x,x-1} = \mathcal{S} \backslash s_i$.

3. calculer $C_1 = I_{s_i,a_x} + \sum_{k=1}^{x-1} \alpha I_{\hat{a}_k,a_x} \mathbf{1}_{\left\{s_i \in \mathcal{S}_{\hat{a}_k,k-1}\right\}}$

4. si $R_j \leq C_1$ alors

5. $\mathcal{S}_{a_x,x-1} = \mathcal{S}_{a_x,x-1} \cup \{s_i\}$.

6. fin du si

7. fin de la boucle

8. sélection du nœud $\hat{a}_x$ par la destination : $\hat{a}_x = \text{argmax}_{a_x \in \mathcal{S} \cup \mathfrak{N}} \left\{ I_{a_x,d} \mathbf{1}_{\left\{s_i \in \mathcal{S}_{a_x,x-1}\right\}} \right\}$

**Revendications**

1. Procédé (1) de transmission de messages successifs formant une trame pour un système de télécommunication à $M$ sources ($s_1, \ldots, s_M$), éventuellement $L$ relais ($r_1, \ldots, r_L$) et une destination ($d$), $M \geq 2$, $L \geq 0$ selon un schéma d'accès multiple orthogonal du canal de transmission entre les noeuds pris parmi les $M$ sources et les $L$ relais avec un nombre maximum de $M + T_{max}$ intervalles de temps par trame transmise dont $M$ intervalles alloués pendant une première phase à la transmission successive des $M$ sources, et $T_{used}$ intervalles pour une ou plusieurs transmissions coopératives alloués pendant une deuxième phase à un ou plusieurs noeuds sélectionnés selon une stratégie de sélection, $T_{used} \leq T_{max}$, **caractérisé en ce qu'**il comprend :

   - une phase initiale d'adaptation de lien avec détermination par la destination d'un débit initial pour chaque source sur la base de la connaissance par la destination d'une qualité moyenne de chacun des liens du système et avec transmission par la destination à chaque source d'une information sur ce débit initial,
   - pour chaque trame parmi plusieurs trames, des transmissions successives des messages des $M$ sources pendant les $M$ intervalles de la première phase avec respectivement des schémas de modulation et de codage déterminés à partir de l'information sur les débits initiaux

   et **en ce que** la détermination d'un débit initial pour chaque source consiste à maximiser une efficacité spectrale moyenne au sein du système, conditionnée à la stratégie de sélection des noeuds intervenant pendant la deuxième phase et sous contrainte d'un BLER individuel moyen par source, et comprend un calcul itératif des débits initiaux pour chaque source à partir d'un premier débit initial déterminé indépendamment pour chaque source en supposant que tous les messages des autres sources sont connus de la destination, la stratégie de sélection des noeuds étant telle qu'elle suit une séquence connue à l'avance par tous les noeuds ou qu'elle prend en compte une information provenant des noeuds indiquant leur jeu de sources correctement décodées.

2. Procédé (1) de transmission selon la revendication 1 selon lequel l'étape de calcul itératif des débits initiaux prend en compte la stratégie de sélection des noeuds.

3. Procédé (1) de transmission selon la revendication 1, selon lequel la stratégie de sélection des noeuds intervenant pendant la deuxième phase correspond, à chaque intervalle, à la sélection du noeud parmi les noeuds qui ont décodé correctement au moins une source que la destination n'a pas décodée correctement à l'issue de l'intervalle de temps précédent dits noeuds éligibles qui bénéficie de la meilleure qualité instantanée parmi des qualités instantanées de tous les liens entre ces noeuds éligibles et la destination.

**4.** Procédé (1) de transmission selon la revendication 1 selon lequel le débit initial d'une source est identique au premier débit.

**5.** Système comprenant $M$ sources ($s_1$, ..., $s_M$), $L$ relais ($r_1$, ..., $r_L$) et une destination $(d)$, $M \geq 2$, $L \geq 0$, pour une mise en œuvre d'un procédé de transmission selon l'une des revendications 1 à 4.

**Patentansprüche**

**1.** Verfahren (1) zur Übertragung sukzessiver Nachrichten, die einen Frame bilden, für ein Telekommunikationssystem mit M Quellen ($s_1$, ..., $s_M$), gegebenenfalls $L$ Relais ($r_1$, ..., $r_L$) und einem Ziel $(d)$, $M \geq 2$, $L \geq 0$, gemäß einem orthogonalen Mehrfachzugriffsschema des Übertragungskanals zwischen den Knoten, die unter den $M$ Quellen und den $L$ Relais gewählt sind, mit einer maximalen Anzahl von $M + T_{max}$ Zeitintervallen je übertragenem Frame, darunter $M$ Intervalle, die während einer ersten Phase der sukzessiven Übertragung der $M$ Quellen zugewiesen werden, und $T_{used}$ Intervallen für eine oder mehrere kooperative Übertragungen, die während einer zweiten Phase einem oder mehreren Knoten zugewiesen werden, die nach einer Auswahlstrategie ausgewählt werden, $T_{used} \leq T_{max}$, **dadurch gekennzeichnet, dass** es umfasst:

- eine Ausgangsphase zur Verbindungsanpassung mit Bestimmung, durch das Ziel, einer Ausgangsrate für jede Quelle auf der Grundlage der Kenntnis, durch das Ziel, einer mittleren Qualität jeder der Verbindungen des Systems und mit Übertragung, durch das Ziel an jede Quelle, einer Information über diese Ausgangsrate,
- für jeden Frame unter mehreren Frames, sukzessive Übertragungen der Nachrichten der $M$ Quellen während der $M$ Intervalle der ersten Phase mit jeweils Modulations- und Codierungsschemata, die ausgehend von der Information über die Ausgangsraten bestimmt werden,

und **dadurch gekennzeichnet, dass** das Bestimmen einer Ausgangsrate für jede Quelle darin besteht, eine mittlere spektrale Effizienz innerhalb des Systems, die durch die Auswahlstrategie der während der zweiten Phase beteiligten Knoten bedingt ist, und unter Beachtung einer mittleren individuellen BLER je Quelle zu maximieren, und ein wiederholtes Berechnen der Ausgangsraten für jede Quelle ausgehend von einer ersten Ausgangsrate umfasst, die unabhängig für jede Quelle unter der Annahme bestimmt wird, dass alle Nachrichten der anderen Quellen dem Ziel bekannt sind, wobei die Auswahlstrategie der Knoten derart ist, dass sie einer allen Knoten im Voraus bekannten Sequenz folgt oder dass sie eine von den Knoten kommende Information berücksichtigt, die ihren Satz korrekt decodierter Quellen angibt.

**2.** Verfahren (1) zur Übertragung nach Anspruch 1, wobei der Schritt des wiederholten Berechnens der Ausgangsraten die Auswahlstrategie der Knoten berücksichtigt.

**3.** Verfahren (1) zur Übertragung nach Anspruch 1, wobei die Auswahlstrategie der während der zweiten Phase beteiligten Knoten, in jedem Intervall, der Auswahl des Knotens unter den Knoten, die mindestens eine Quelle korrekt decodiert haben, die das Ziel nach dem vorhergehenden Zeitintervall nicht korrekt decodiert hat, infrage kommende Knoten genannt, entspricht, der die beste momentane Qualität unter den momentanen Qualitäten aller Verbindungen zwischen den infrage kommenden Knoten und dem Ziel genießt.

**4.** Verfahren (1) zur Übertragung nach Anspruch 1, wobei die Ausgangsrate einer Quelle mit der ersten Rate identisch ist.

**5.** System, umfassend $M$ Quellen ($s_1$, ..., $s_M$), $L$ Relais ($r_1$, ..., $r_L$) und ein Ziel $(d)$, $M \geq 2$, $L \geq 0$, zu einer Durchführung eines Verfahrens zur Übertragung nach einem der Ansprüche 1 bis 4.

**Claims**

**1.** Method (1) for transmitting successive messages forming a frame for a telecommunications system with $M$ sources ($s_1$, ..., $s_M$), possibly $L$ relays ($r_1$, ..., $r_L$) and a destination $(d)$, $M \geq 2$, $L \geq 0$ according to an orthogonal multiple access scheme of the transmission channel between the nodes taken from among the M sources and the $L$ relays with a maximum number of $M + T_{max}$ time slots per transmitted frame including $M$ slots allocated, during a first phase, to the successive transmission of the $M$ sources, and $T_{used}$ slots for one or more cooperative transmissions allocated, during a second phase, to one or more nodes selected according to a selection strategy, $T_{used} \leq T_{max}$, **characterized**

**in that** it comprises:

- an initial link adaptation phase with determination, by the destination, of an initial rate for each source on the basis of the destination's knowledge of an average quality of each of the links in the system and with transmission of information about this initial rate by the destination to each source,
- for each frame from among a plurality of frames, successive transmissions of messages from the $M$ sources during the $M$ slots of the first phase with, respectively, modulation and coding schemes determined from the information about the initial rates

and **in that** the determination of an initial rate for each source consists in maximizing an average spectral efficiency within the system, conditional upon the node selection strategy used during the second phase and under the constraint of an average individual BLER for each source, and comprises iteratively calculating the initial rates for each source on the basis of a first initial rate determined independently for each source assuming that all the messages from the other sources are known to the destination, the node selection strategy being such that it follows a sequence known in advance by all the nodes or that it takes into account information coming from the nodes and indicating their set of correctly decoded sources.

2. Transmission method (1) according to Claim 1, wherein the step of iteratively calculating the initial rates takes into account the node selection strategy.

3. Transmission method (1) according to Claim 1, wherein the node selection strategy used during the second phase corresponds, at each slot, to the selection of the node from among the nodes that have correctly decoded at least one source that the destination has not correctly decoded at the end of the previous time slot, called eligible nodes, that has the best instantaneous quality from among the instantaneous qualities of all of the links between these eligible nodes and the destination.

4. Transmission method (1) according to Claim 1, wherein the initial rate of a source is identical to the first rate.

5. System comprising $M$ sources ($s_1$, ..., $s_M$), $L$ relays ($r_1$, ...,$r_L$) and a destination ($d$), $M \geq 2$, $L \geq 0$, for implementing a transmission method according to one of Claims 1 to 4.

Fig.1

Fig.2

Transmission d'une trame

Fig.3

## RÉFÉRENCES CITÉES DANS LA DESCRIPTION

**Documents brevets cités dans la description**

- WO 2017098188 A1

**Littérature non-brevet citée dans la description**

- Multi-Source Multi-Relay Wireless Networks. *IEEE Commun. Lett.,* Septembre 2016, vol. 20 (9), 1808-1811